# EUROPÄISCHE PATENTSCHRIFT

(11) **EP 0 889 341 B1**
(45) Veröffentlichungstag und Bekanntmachung des Hinweises auf die Patenterteilung: **10.12.2008**
(21) Anmeldenummer: 98111595.9
(22) Anmeldetag: 24.06.1998
(51) Int. Cl.: G02B 6/42, G02B 6/25

(54) **Anschlussklemme für Lichtwellenleiterkabel**
Connection terminal for optical fibre cable
Borne de connexion pour câble à fibre optique

(30) Priorität: 03.07.1997 DE 19728492; 23.07.1997 DE 19732092
(43) Veröffentlichungstag der Anmeldung: 07.01.1999
(73) Patentinhaber: PHOENIX CONTACT GmbH & Co. Kg, 32825 Blomberg (DE)
(72) Erfinder: Behr, Thorsten, 32805 Horn-Badmeinberg (DE); Berg, Roland, 37671 Höxter (DE); Brand, Jürgen, 32760 Detmold (DE); Reibke, Heinz, 32105 Bad Salzuflen (DE)
(74) Vertreter: Gesthuysen, von Rohr & Eggert

(56) Entgegenhaltungen:
- DE-A- 19 512 110
- US-A- 4 422 715
- US-A- 4 953 940
- US-A- 4 986 625

## Beschreibung

Die Erfindung betrifft eine Anschlußklemme für mindestens ein Lichtwellenleiterkabel gemäß dem Oberbegriff des Patentanspruch 1.

Bei einem Lichtwellenleiterkabel handelt es sich um ein zum Lichttransport geeignetes optisches Bauelement, welches häufig aus einer Vielzahl, im Verhältnis zu ihrer Länge sehr dünner, zu einem Bündel zusammengefaßter einzelner Glasfasern besteht; unter Lichtwellenleiterkabel soll im folgenden jedoch auch ein solches mit einer Einzelfaser verstanden werden. Auch sollen unter Lichtwellenleiterkabel solche optischen Bauelemente verstanden werden, die nicht aus Glasfasern bestehen, sondern beispielsweise aus Kunststoff; ganz allgemein sollen unter Lichtwellenleiterkabel auch dielektrische (= optische) Lichtwellenleiter fallen.

Der Lichttransport in axialer Richtung durch jede Einzelfaser des Bündels erfolgt durch Totalreflexion an den Wandungen der Faserkerne. Um die für die Ausbreitung des Lichtes in der Faser notwendige Totalreflektion zu ermöglichen, ist der Faserkern jeder Einzelfaser von einer Wandung, dem sogenannten Mantel, umgeben, dessen Brechzahl niedriger ist als die des Kernes; in der Regel ist der Mantel ein aufgeschlossener Glasmantel. Lichtwellenleiterkabel werden zur Führung des als Trägerschwingung dienenden Lichtes beispielsweise in der optischen Nachrichtenübertragung verwendet. Als Sender eignen sich beispielsweise Laser- und Leuchtdioden, während als Empfänger beispielsweise Fotodioden dienen. Durch die im Vergleich zu elektrischen Signalen wesentlich höhere Trägerfrequenz des Lichtes können größere Datenmengen in gleicher Zeit bzw. gleiche Datenmengen in kürzerer Zeit übertragen werden als mit herkömmlichen Koaxialkabeln. Durch die Weiterentwicklung sowohl der Sende- und Empfangseinrichtungen als auch der Lichtwellenleiterkabel können die Verluste in den Lichtwellenleiterkabeln immer weiter herabgesetzt werden.

Die Verbindung zweier Lichtwellenleiterkabel oder aber der Anschluß eines Lichtwellenleiterkabels an ein bestimmtes Bauteil ist jedoch in der Regel schwierig, da bei ungenauer Kontaktierung der vorderen Stirnfläche des Lichtwellenleiterkabels mit dem anzuschließenden Bauteil oder Lichtwellenleiterkabel eine Verzerrung der entsprechenden Signale und/oder ein Verlust von Leistung auftreten kann. Deshalb besteht eine steigende Nachfrage nach einfach zu handhabenden und schnell anschließbaren Anschlußklemmen für Lichtwellenleiterkabel.

Aus der DE 37 27 092 C1 ist eine Lichtleiteranschlußklemme zur Aufnahme und Halterung eines Lichtleiters bekannt, bei dem das Lichtwellenleiterkabel in ein Einsatzgehäuse eines Führungsgehäuses eingesetzt werden kann und sodann zusammen mit dem Einsatzgehäuse mittels einer Stellschraube in einem Führungskanal des Führungsgehäuses zwischen der Einsatzstellung und der Montagestellung verschoben werden kann. Beim Bewegen des Lichtwellenleiterkabels von der Montagestellung in die Einsatzstellung wird das vordere Ende des Lichtwellenleiterkabels durch eine in dem Führungsgehäuse befestigte Schneide abgetrennt. Der Anschluß des Lichtwellenleiterkabels an ein bestimmtes optisches Bauteil hängt bei der Lichtleiteranschlußklemme gemäß der DE 37 27 092 C1 von der exakten Positionierung des Führungsgehäuses gegenüber dem optischen Bauteil, beispielsweise einem zweiten Lichtwellenleiterkabel ab.

Aus der DE 195 12 110 A1 ist eine Anschlußklemme für Lichtwellenleiterkabel bekannt, bei der eine Sende- und/oder Empfangseinrichtung in dem Gehäuse integriert ist, so daß das Lichtwellenleiterkabel mit seiner vorderen Stirnfläche im geklemmten Zustand mit einer Kontaktstirnfläche der Sende- und/oder Empfangseinrichtung zusammenwirkt.

Der vorliegenden Erfindung liegt nun die Aufgabe zugrunde, die eingangs genannte Anschlußklemme für Lichtwellenleiterkabel dahingehend zu verbessern, daß der Anschluß eines Lichtwellenleiterkabels auch dann problemlos möglich ist, wenn sich die Anschlußklemme bereits im eingebauten Zustand befindet.

Diese Aufgabe ist bei der Anschlußklemme gemäß dem Oberbegriff des Patentanspruchs 1 erfindungsgemäß durch die Merkmale des Kennzeichenteils des Patentanspruchs 1 gelöst.

Somit ist gewährleistet, daß auch im eingebauten Zustand der Anschlußklemme ein Auswechseln eines oder mehrerer Lichtwellenleiterkabel erfolgen kann, ohne daß die Anschlußklemme ausgebaut werden muß. Die Frontfläche des Gehäuses, die eine Längsöffnung aufweist, durch die das Lichtwellenleiterkabel in die Einführöffnung des Aufzugelements eingesteckt werden kann, muß aus funktionstechnischen Gründen auch im eingebauten Zustand der Anschlußklemme immer frei bleiben. Bei der erfindungsgemäßen Anschlußklemme muß jedoch keine weitere Fläche des Gehäuses, außer der Frontfläche, von außen zugänglich sein.

Ist in einer von der weiteren Längsöffnung abgewandten Wand eines Aufnahmeraumes für das Aufzugelement eine als Widerlager für das Betätigungselement dienende Ausnehmung vorgesehen, so kann das Aufzugelement mit, gegenüber einer Lösung ohne Widerlager, aufgrund des Hebelgesetzes reduziertem Kraftaufwand im Inneren des Gehäuses bewegt werden.

Bei einer bevorzugten Ausführungsform der erfindungsgemäßen Anschlußklemme weist das Gehäuse mindestens einen Kabelkanal zur Aufnahme der abgeschnittenen Lichtwellenleiterkabelstücke auf. Dabei befindet sich die Austrittsöffnung des Kabelkanals vorteilhafterweise in der Frontfläche des Gehäuses. Dadurch wird sichergestellt, daß die durch die Schneideinrichtung abgeschnittenen Lichtwellenleiterkabelstücke nicht in das Innere eines die Anschlußklemme aufnehmenden Gerätes fallen können, sondern in dem Kabelkanal geführt werden. Wenn sich eine entsprechend große Anzahl an Lichtwellenleiterkabelstücken in dem Kabelkanal gesammelt hat, fallen diese aus der Austrittsöffnung an der Frontfläche des Gehäuses heraus.

Nach einer weiteren vorteilhaften Ausgestaltung der Lehre der Erfindung, die hier noch kurz angeführt werden soll, sind an der Innenfläche mindestens einer Längsöffnung Längsrippen als Zugentlastung für das in die Längsöffnung eingeschobene Lichtwellenleiterkabel ausgebildet.

Wenn die Kontaktstirnfläche der Sende- und/oder Empfangseinrichtung nicht plan ausgeführt ist, sondern, wie aus strahlenoptischen Gesichtspunkten vorteilhaft, konkav ausgebildet ist, sind die Längsrippen vorteilhafterweise in ihrem unteren Bereich in Richtung auf das Innere des Gehäuses hin abgebogen. Die zuvor ihrer besonderen Funktion wegen beschriebenen Längsrippen können auch nur diese Funktion haben, also nicht, wie wie zuvor beschrieben, als Zugentlastung für das in die Längsöffnung eingeschobene Lichtwellenleiterkabel ausgebildet sein. Bei der zuvor beschriebenen Ausgestaltung und Funktion der Längsrippen wird das durch die Schneide der Schneideinrichtung gerade geschnittene Stück des Lichtwellenleiterkabels beim weiteren Abwärtsbewegen des Aufzugelements durch den unteren, abgebogenen Bereich der Längsrippen zur Sende- und/ oder Empfangseinrichtung hin geschoben.

Im einzelnen gibt es nun eine Vielzahl von Möglichkeiten, die erfindungsgemäße Anschlußklemme für Lichtwellenleiterkabel auszugestalten. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: eine perspektivische Darstellung einer bevorzugten Ausführungsform einer erfindungsgemäßen Anschlußklemme in Funktionsstellung von der Seite,
- Fig. 2: die Anschlußklemme aus Fig. 1 von vorne, ebenfalls in Funktionsstellung,
- Fig. 3: die Anschlußklemme aus Fig. 1 schräg von hinten, in Montagestellung,
- Fig. 4: die Anschlußklemme aus Fig. 1 ebenfalls schräg von hinten, jedoch in Funktionsstellung, und
- Fig. 5: die Anschlußklemme aus Fig. 1 mit einer Abdeckung schräg von vorne.

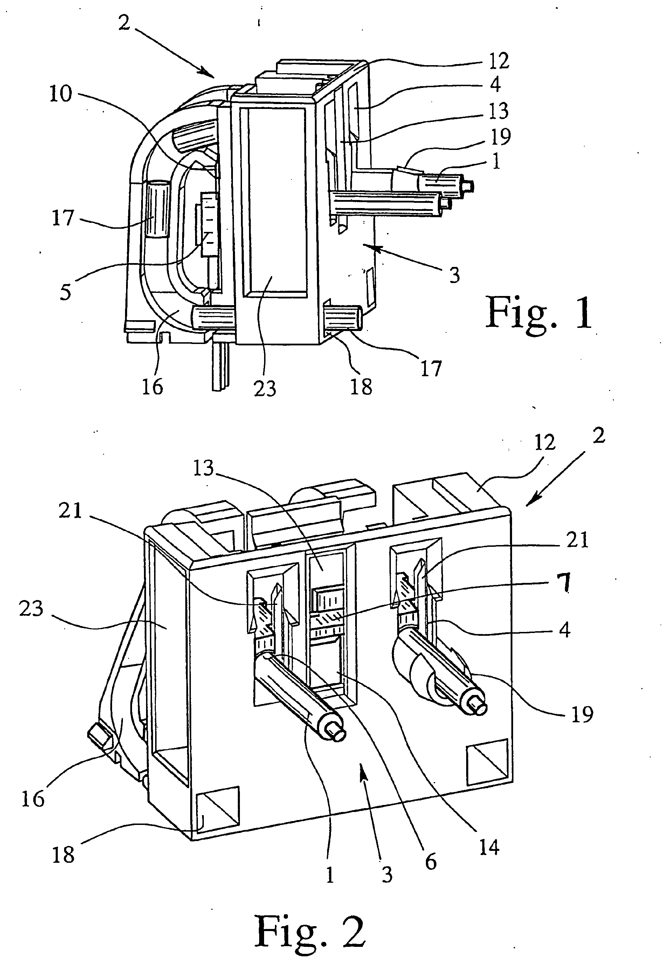

Die Fig. 1 bis 5 zeigen eine Anschlußklemme für zwei Lichtwellenleiterkabel 1. Die Anschlußklemme besteht aus einem Gehäuse 2, dessen Frontfläche 3 zwei Längsöffnungen 4 aufweist, durch die die Lichtwellenleiterkabel 1 leicht in das Innere des Gehäuses 2 eingesteckt werden können. In dem Gehäuse 2 sind zwei optische Sende- und/oder Empfangseinrichtungen 5 so integriert, daß ein zwei Einführöffnungen 6 aufweisendes Aufzugelement 7 die beiden Lichtwellenleiterkabel 1 in der Funktionsstellung so positioniert, daß die Stirnflächen 8 der Lichtwellenleiterkabel 1 Kontaktstirnflächen 9 der optischen Sende- und/oder Empfangseinrichtungen 5 gegenüber liegen. Das Gehäuse 2 der Anschlußklemme weist außerdem noch eine Schneide 10 auf, die sich zwar in einer horizontal fest vorgegebenen Position in dem Gehäuse 2 befindet, jedoch zu Reparaturzwecken seitlich aus dem Gehäuse 2 herausgezogen werden kann.

In der Montagestellung befindet sich das Aufzugelement 7 im oberen Bereich des Gehäuses 2, der obere Rand 11 des Aufzugelements 7 schließt also fast mit dem oberen Rand 12 des Gehäuses 2 ab. In der Montagestellung befindet sich ein Lichtwellenleiterkabel 1, welches durch die Längsöffnung 4 des Gehäuses 2 und die Einführöffnung 6 des Aufzugelements 7 gesteckt ist, oberhalb der Schneide 10.

In der Funktionsstellung der Anschlußklemme befindet sich das Aufzugelement 7 im unteren Bereich des Gehäuses 2. Das Aufzugelement 7 ist vorteilhafterweise so dimensioniert, daß dessen unterer Rand in der Funktionsstellung auf dem Boden des Gehäuses 2 aufliegt. In der Funktionsstellung befindet sich nun das durch die Einführöffnung des Aufzugelements 7 gesteckte Lichtwellenleiterkabel 1 direkt vor der optischen Sende- und/oder Empfangseinrichtung 5. Genauer gesagt, es befindet sich die Stirnfläche 8 des Lichtwellenleiterkabels 1 direkt vor der Kontaktstirnfläche 9 der optischen Sende- und/oder Empfangseinrichtung 5.

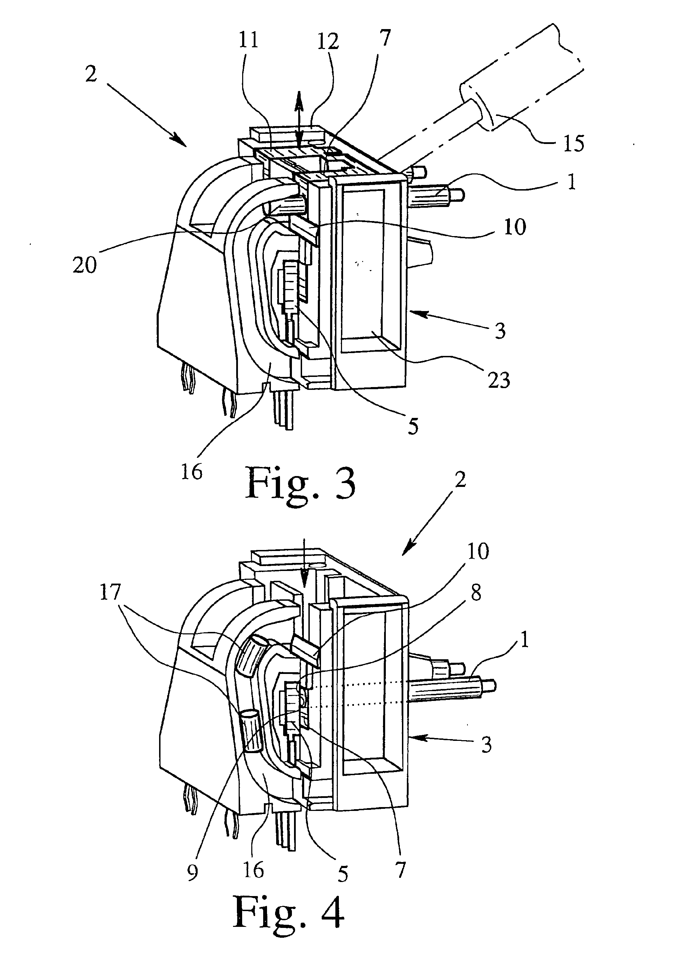

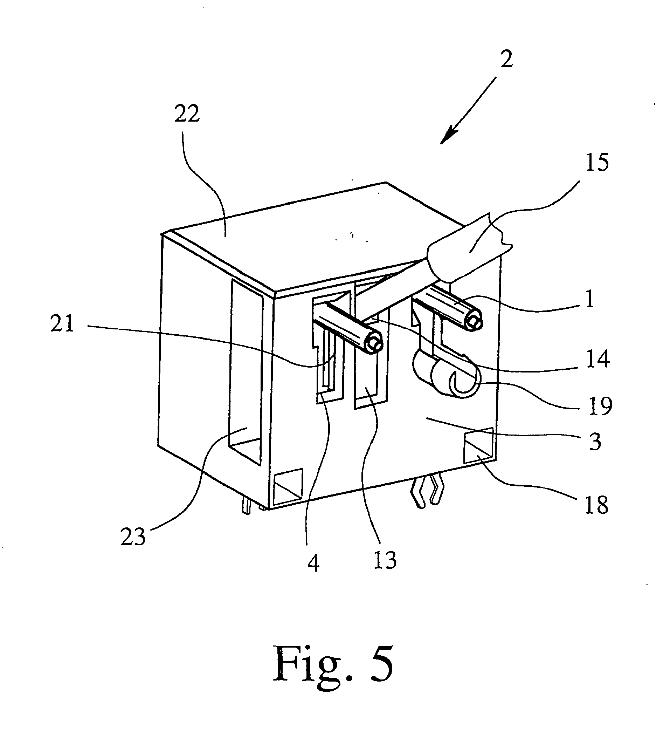

Zum Bewegen des Aufzugelements 7 von der Montagestellung in die Funktionsstellung und umgekehrt befindet sich in der Frontfläche 3 des Gehäuses 2 eine weitere Längsöffnung 13 und in dem Aufzugelement 7 eine Eingriffsöffnung 14. Durch die Längsöffnung 13 und die Eingriffsöffnung 14 des Aufzugelements 7 kann nun ein Betätigungsmittel 15 in eine als Widerlager dienende, nicht dargestellte Ausnehmung in einer von der Längsöffnung 13 abgewandten Wand eines Aufnahmeraumes für das Aufzugselement 7 eingreifen. Ein solches Betätigungsmittel 15 kann beispielsweise einfach die Spitze eines Schraubendrehers sein, wie es in den Fig. 3 und 5 dargestellt ist. Die Eingriffsöffnung 14 dient beim Bewegen des Aufzugelements 7 als Angriffspunkt für die entsprechend dem Hebelgesetz verstärkte am Betätigungsmittel 15 aufgebrachte Kraft. Somit ist nur eine geringe Kraft zum Verstellen des Aufzugelements 7 von der Funktionsstellung in die Montagestellung und umgekehrt notwendig. Außerdem werden, während des Verstellens des Aufzugelements 7 von der Funktionsstellung in die Montagestellung und umgekehrt, die Kontaktstirnflächen 9 der optischen Sende- und/oder Empfangseinrichtungen 5 durch das Aufzug-element 7 abgedeckt, so daß einerseits kein Staub auf die Kontaktstirnflächen 9 ge-langen kann, andererseits bei einer Sendeeinrichtung mit hoher Lichtleistung ein Sichtschutz für den Benutzer gewährleistet ist.

In den Fig. 1 bis 4 sind zwei Kabelkanäle 16 sichtbar, die zur Aufnahme der durch die Schneide 10 abgeschnittenen Lichtwellenleiterkabelstücke 17 dienen. In den unteren beiden Ecken der Frontfläche 3 des Gehäuses 2 befindet sich jeweils ein Loch, welches jeweils als Austrittsöffnung 18 für einen der beiden Kabelkanäle 16 dient.

Wie die Fig. 1, 2, 4 und 5 zeigen, ist im Ausführungsbeispiel ein Vorbau 19 am unteren Ende einer der beiden Längsöffnungen 4 ausgebildet, der einen Knickschutz für das Lichtwellenleiterkabel 1 bildet. Selbstverständlich können auch zwei Vorbauten 19 zum Knickschutz beider Lichtwellenleiterkabel 1 vorhanden sein.

Zur Funktionsweise der erfindungsgemäßen Anschlußklemme nun folgendes:

In der Montagestellung werden die Lichtwellenleiterkabel 1 durch die Längsöffnungen 4 der Frontfläche 3 und die Einführöffnungen 6 des Aufzugelements 7 durchgesteckt, so daß die Enden 21 der Lichtwellenleiterkabel 1 jeweils über die Schneide 10 hinausragen. Um von der Montagestellung in die Funktionsstellung zu gelangen, wird nun das Aufzugelement 7 mittels des Betätigungsmittels 15, welches in die Eingriffsöffnung 14 des Aufzugelements 7 eingreift, nach unten bewegt. Dabei werden die aus dem Aufzugelement 7 nach hinten rausragenden Enden 20 der Lichtwellenleiterkabel 1 beim Herunterbewegen des Aufzugelements 7 durch die Schneide 10 abgeschnitten. Die Lichtwellenleiterkabelstücke 17 werden von den Kabelkanälen 16 aufgenommen. Schließlich befinden sich die Lichtwellenleiterkabel 1 mit ihren Stirnflächen 8 genau vor den Kontaktstirnflächen 9 der optischen Sende- und/oder Empfangseinrichtungen 5. Der Anschließvorgang der Lichtwellenleiterkabel 1 an die optische Sende- und/oder Empfangseinrichtung 5 ist abgeschlossen. Müssen die Lichtwellenleiterkabel 1 ausgetauscht werden, so wird das Aufzugelement 7 einfach mittels eines Betätigungsmittels 15 aus der Funktionsstellung in die Montagestellung gebracht. Die Lichtwellenleiterkabel 1 können aus dem Gehäuse 2 herausgezogen und neue Lichtwellenleiterkabel 1 können eingeführt werden.

In den Fig. 2 und 5 sind an der Innenseite der Längsöffnungen 4 Längsrippen 21 als Zugentlastung für die in die Längsöffnungen 4 eingeschobenen Lichtwellenleiterkabel 1 sichtbar. Diese Längsrippen 21 dienen nicht nur als Zugentlastung für die angeschlossenen Lichtwellenleiterkabel 1, sondern sorgen auch dafür, daß während des Abschneidens der Enden 20 der Lichtwellenleiterkabel 1 beim Herunterbewegen des Aufzugelements 7 die Lichtwellenleiterkabel 1 nicht verrutschen. Dadurch ist ein gerades Abschneiden der Lichtwellenleiterkabel 1 gewährleistet.

In Fig. 5 ist nun das Gehäuse 2 der Anschlußklemme mit einer zusätzlichen Abdekkung 22 versehen. Durch die Abdeckung 22 wird einerseits das Eindringen von Staub in das Gehäuse 2 verhindert, andererseits wird auch eine Beeinflussung der optischen Sende- und/oder Empfangseinrichtungen 5 durch Fremdlicht ausgeschlossen. Wird die Abdeckung 22 aus Metall ausgeführt, so kann zusätzlich eine Abschirmung der optischen Sende- und/oder Empfangseinrichtungen erzielt werden. Die Seitenflächen 23 des Gehäuses 2 sind so ausgebildet, daß mehrere Anschlußklemmen zu einer Anschlußeinheit miteinander verbunden werden können.

## Patentansprüche

1. Anschlußklemme für mindestens ein Lichtwellenleiterkabel (1), mit einem Gehäuse (2), dessen Frontfläche (3) mindestens eine Längsöffnung (4) aufweist, mit mindestens einer optischen Sende- und/oder Empfangseinrichtung (5), mit einem mindestens eine Einführöffnung (6) aufweisenden, in dem Gehäuse (2) gleitend bewegbaren Aufzugelement (7) zum definierten Zusammenführen des Lichtwellenleiterkabels (1) mit der Sende- und/oder Empfangseinrichtung (6) und mit einer mindestens eine Schneide (10) aufweisenden Schneideinrichtung, wobei im der Funktionsstellung entsprechenden Endzustand die vordere Stirnfläche (8) des Lichtwellenleiterkabels (1) der Kontaktstirnfläche (9) der Sende- und/oder Empfangseinrichtung (5) gegenüber liegt,
**dadurch gekennzeichnet,**
**daß** das Einführen des Lichtwellenleiterkabels (1) in die Einführöffnung (6) des Aufzugelements (7) und das Betätigen des Aufzugelements (7) zum definierten Zusammenführen von Lichtwellenleiterkabel (1) und Sende- und/oder Empfangseinrichtung (5) von einer Seite möglich ist und
zur Betätigung des Aufzugelements (7) in der Frontfläche (3) des Gehäuses (2) eine weitere Längsöffnung (13) und in dem Aufzugelement (7) eine Eingriffsöffnung (14) zum Eingreifen eines Betätigungsmittels (15) vorgesehen ist, wobei das Betätigungsmittel (15) zur Betätigung des Aufzugelements (7) durch die Längsöffnung (13) einsteckbar ist.

2. Anschlußklemme nach Anspruch 1, **dadurch gekennzeichnet, daß** in einer von der Längsöffnung (13) abgewandten Wand eines Aufnahmeraumes für das Aufzugelement (7) eine als Widerlager für das Betätigungselement (15) dienende Ausnehmung vorgesehen ist.

3. Anschlußklemme nach Anspruch 1 oder 2, **dadurch gekennzeichnet, daß** das Gehäuse (2) mindestens einen Kabelkanal (16) zur Aufnahme der abgeschnittenen Lichtwellenleiterkabelstücke (17) aufweist.

4. Anschlußklemme nach Anspruch 3, **dadurch gekennzeichnet, daß** in der Frontfläche des Gehäuses (2) eine Austrittsöffnung (18) des Kabelkanals (16) zur Aufnahme der abgeschnittenen Lichtwellenleiterkabelstücke (17) liegt.

5. Anschlußklemme nach einem der Ansprüche 1 bis 4, **dadurch gekennzeichnet, daß** das Aufzugelement (7) während der Aufzugbewegung die Kontaktstirnfläche (9) der optischen Sende- und/oder Empfangseinrichtung (5) abdeckt.

6. Anschlußklemme nach einem der Ansprüche 1 bis 5, **dadurch gekennzeichnet, daß** die Schneideinrichtung die Enden (20) der Lichtwellenleiterkabel (1) während der Abwärtsbewegung des Aufzugelements (7) abtrennt.

7. Anschlußklemme nach einem der Ansprüche 1 bis 6, **dadurch gekennzeichnet, daß** an der Innenfläche mindestens einer Längsöffnung (4) Längsrippen (21) als Zugentlastung für das in die Längsöffnung (4) eingeschobene Lichtwellenleiterkabel (1) ausgebildet sind.

8. Anschlußklemme nach Anspruch 7, **dadurch gekennzeichnet, daß** die Längsrippen (21) in ihrem unteren Bereich in Richtung auf das Innere des Gehäuses (2) hin abgebogen sind.

9. Anschlußklemme nach einem der Ansprüche 1 bis 8, **dadurch gekennzeichnet, daß** das Gehäuse (2) durch eine Abdeckung (22), die beispielsweise aus Kunststoff oder aus Metall bestehen kann, verschließbar ist.

10. Anschlußklemme nach einem der Ansprüche 1 bis 9, **dadurch gekennzeichnet, daß** das Gehäuse (2) an mindestens einer Seitenfläche (23) so ausgebildet ist, daß mehrere Anschlußklemmen zu einer Anschlußeinheit miteinander verbunden werden können.

## Claims

1. Connection terminal for at least one optical waveguide cable (1), with a housing (2), whose front face (3) has at least one longitudinal opening (4), with at least one optical transmission and/or reception device (5), with a lifting element (7), which has at least one insertion opening (6) and which is capable of moving in sliding fashion in the housing (2), for bringing together the optical waveguide cable (1) in a defined manner with the transmission and/or reception device (5) and with a cutting device, which has at least one blade (10), the front end face (8) of the optical waveguide cable (1) lying opposite to the contact end face (9) of the transmission and/or reception device (5) in the final state corresponding to the function position,
**characterized in**
**that** the insertion of the optical waveguide cable (1) into the insertion opening (6) of the lifting element (7) and the actuation of the lifting element (7) for bringing together the optical waveguide cable (1) and the transmission and/or reception device (5) in a defined manner is possible from one side, and,
in order to actuate the lifting element (7), a further longitudinal opening (13) is provided in the front face (3) of the housing (2) and an engagement opening (14) for the engagement of an actuating means (15) is provided in the lifting element (7), the actuating means (15) being capable of being plugged in through the longitudinal opening (13) in order to actuate the lifting element (7).

2. Connection terminal according to Claim 1, **characterized in that** a recess, which acts as an abutment for the actuating element (15), is provided in a wall of an accommodating area for the lifting element (7), which wall faces away from the longitudinal opening (13).

3. Connection terminal according to Claim 1 or 2, **characterized in that** the housing (2) has at least one cable duct (16) for accommodating the cut-away optical waveguide cable pieces (17).

4. Connection terminal according to Claim 3, **characterized in that** an outlet opening (18) of the cable duct (16) for accommodating the cut-away optical waveguide cable pieces (17) is positioned in the front face of the housing (2).

5. Connection terminal according to one of Claims 1 to 4, **characterized in that** the lifting element (7) covers the contact end face (9) of the optical transmission and/or reception device (5) during the lifting movement.

6. Connection terminal according to one of Claims 1 to 5, **characterized in that** the cutting device cuts off the ends (20) of the optical waveguide cables (1) during the downward movement of the lifting element (7).

7. Connection terminal according to one of Claims 1 to 6, **characterized in that** longitudinal ribs (21) are formed on the inner face of at least one longitudinal opening (4) as strain relief for the optical waveguide cable (1) which has been inserted into the longitudinal opening (4).

8. Connection terminal according to Claim 7, **characterized in that** the longitudinal ribs (21) are bent back towards the interior of the housing (2) in their lower region.

9. Connection terminal according to one of Claims 1 to 8, **characterized in that** the housing (2) can be closed by a cover (22), which may be made from, for example, plastic or metal.

10. Connection terminal according to one of Claims 1 to 9, **characterized in that** the housing (2) is formed on at least one side face (23) in such a way that a plurality of connection terminals can be connected to one another to form a connection unit.

## Revendications

1. Borne de connexion pour au moins un câble à fibre optique (1), avec un boîtier (2), dont la surface frontale (3) comporte au moins une ouverture allongée (4), avec au moins un dispositif optique d'émission et/ou de réception (5), avec un élément élévateur (7) comportant au moins une ouverture d'introduction (6), pouvant être déplacé par coulissement dans le boîtier (2), pour la réunion définie du câble à fibre optique (1) avec le dispositif d'émission et/ou de réception (5) et avec un dispositif de coupe comportant au moins un tranchant (10), la surface frontale avant (8) du câble à fibre optique (1) se trouvant en face de la surface frontale de contact (9) du dispositif d'émission et/ou de réception (5) dans l'état final correspondant à la position de fonctionnement,
**caractérisé en ce**
**que** l'introduction du câble à fibre optique (1) dans l'ouverture d'introduction (6) de l'élément élévateur (7) et la manoeuvre de l'élément élévateur (7) pour la réunion définie du câble à fibre optique (1) et du dispositif d'émission et/ou de réception (5), sont possibles à partir d'un côté, et
**que** pour la manoeuvre de l'élément élévateur (7), il est prévu une autre ouverture allongée (13) dans la surface frontale (3) du boîtier (2) et une ouverture d'intervention (14) dans l'élément élévateur (7) pour intervenir avec un moyen de manoeuvre (15), le moyen de manoeuvre (15) pour la manoeuvre de l'élément élévateur (7) pouvant être inséré à travers l'ouverture allongée (13).

2. Borne de connexion selon la revendication 1, **caractérisée en ce qu'**un évidement servant d'appui pour l'élément de manoeuvre (15) est prévu dans une des parois s'écartant de l'ouverture allongée (13) d'un espace d'accueil pour l'élément élévateur (7).

3. Borne de connexion selon la revendication 1 ou 2, **caractérisée en ce que** le boîtier (2) comporte au moins un canal de câble (16) pour accueillir les bouts coupés (17) du câble à fibre optique.

4. Borne de connexion selon la revendication 3, **caractérisée en ce que** dans la surface frontale du boîtier (2) se trouve une ouverture de sortie (18) du canal de câble (16) pour accueillir les bouts coupés (17) du câble à fibre optique.

5. Borne de connexion selon une des revendications 1 à 4, **caractérisée en ce que** pendant le mouvement d'élévation, l'élément élévateur (7) recouvre la surface frontale de contact (9) du dispositif optique d'émission et/ou de réception (5).

6. Borne de connexion selon une des revendications 1 à 5, **caractérisée en ce que** le dispositif de coupe sectionne les extrémités (20) des câbles à fibre optique (1) pendant le mouvement vers le bas de l'élément élévateur (7).

7. Borne de connexion selon une des revendications 1 à 6, **caractérisée en ce que** des nervures longitudinales (21) sont formées sur la surface intérieure d'au moins une ouverture allongée (4) comme décharge de traction pour le câble à fibre optique (1) inséré dans l'ouverture allongée (4).

8. Borne de connexion selon la revendication 7, **caractérisée en ce que** les nervures longitudinales (21) sont incurvées vers l'intérieur du boîtier (2) dans leur partie inférieure.

9. Borne de connexion selon une des revendications 1 à 8, **caractérisée en ce que** le boîtier (2) peut être fermé par un couvercle de protection (22) pouvant être constitué par exemple de matière plastique ou de métal.

10. Borne de connexion selon une des revendications 1 à 9, **caractérisée en ce que** le boîtier (2) est développé au moins sur une surface latérale (23) de telle sorte que plusieurs bornes de connexion puissent être reliées entre elles en une unité de connexion.
